**Europäisches Patentamt**

**European Patent Office**

**Office européen des brevets**

(19)

(11) Veröffentlichungsnummer: **0 076 866**
**B1**

(12)

# EUROPÄISCHE PATENTSCHRIFT

(45) Veröffentlichungstag der Patentschrift:
**02.05.85**

(51) Int. Cl.⁴: **G 01 B 11/30**

(21) Anmeldenummer: **81108094.4**

(22) Anmeldetag: **09.10.81**

(54) **Interpolierendes Lichtschnitt-Verfahren.**

(43) Veröffentlichungstag der Anmeldung:
**20.04.83 Patentblatt 83/16**

(45) Bekanntmachung des Hinweises auf die Patenterteilung:
**02.05.85 Patentblatt 85/18**

(84) Benannte Vertragsstaaten:
**DE FR GB IT**

(56) Entgegenhaltungen:
**DE - B - 2 601 369**

(73) Patentinhaber: **IBM DEUTSCHLAND GMBH,
Pascalstrasse 100, D-7000 Stuttgart 80 (DE)**
(84) Benannte Vertragsstaaten: **DE**

(73) Patentinhaber: **International Business Machines
Corporation, Old Orchard Road, Armonk, N.Y. 10504 (US)**
(84) Benannte Vertragsstaaten: **FR GB IT**

(72) Erfinder: **Korth, Hans-Erdmann, Sandbergerstrasse 34,
D-7000 Stuttgart 1 (DE)**

(74) Vertreter: **Teufel, Fritz, Dipl.-Phys., IBM Deutschland
GmbH. Europäische Patentdienste Postfach 265,
D-8000 München 22 (DE)**

## Beschreibung

Die Erfindung betrifft ein Lichtschnittverfahren nach dem Oberbegriff des Anspruchs 1.

Die Lichtschnittechnik ist ein bekanntes Verfahren zur Untersuchung der Gestalt oder Rauhigkeit von Oberflächen; dazu wird eine meist linienförmige Struktur (ein einzelnes Lichtband oder ein Hell-Dunkel-Streifenmuster) auf die zu untersuchende Oberfläche projiziert und das Objekt unter einem Winkel α zur Projektionsrichtung beobachtet. Aus den Verzerrungen des Streifenmusters in dem so erzeugten Bild kann die Topographie der Oberfläche erschlossen werden, auf die das Streifenmuster projiziert wurde. Auf diese Weise lassen sich beispielsweise Unebenheiten der Oberfläche, deren Neigung, Kanten usw. bestimmen.

Der Tiefenbereich am Objekt, der mit einem Lichtschnittverfahren abgetastet werden kann, ist durch die Schärfentiefe der aufprojizierten Struktur begrenzt. Die bei der Auswertung erreichbare Auflösung der Tiefe ergibt sich aus der kleinsten lateralen Verschiebung der Linienstruktur an Unebenheiten, multipliziert mit dem Kotangens des Winkels α zwischen Projektionsrichtung und Beobachtungsrichtung. Da dieser Winkel α im allgemeinen klein gehalten werden muss, um den Schärfentiefenbereich der Abbildung gut nutzen und die Schattenbereiche am Objekt klein zu halten, ist die Tiefenauflösung stets geringer als die laterale Auflösung. Bei stark strukturierten Objekten muss die aufprojizierte Struktur vergleichsweise grossflächig sein, damit sie im entstehenden Bild noch erkannt werden kann. Grossflächige Linienstrukturen ergeben jeden in vielen Fällen in sich geschlossene Linienzüge im entstehenden Bild, so dass keine eindeutige Aussage über die Objekttopographie möglich ist.

Die vorliegende Erfindung stellt sich daher die Aufgabe, ein Lichtschnittverfahren der eingangs genannten Art anzugeben, das eine sehr hohe Tiefenauflösung besitzt.

Diese Aufgabe wird durch die in Anspruch 1 gekennzeichnete Erfindung gelöst.

Das hier vorgeschlagene interpolierende Lichtschnittverfahren mit spektralcodierten und gegeneinander phasenverschobenen Projektionsmustern erlaubt es, Oberflächentopographie mit hoher Genauigkeit in Echtzeit zu bestimmen. Bei entsprechender Codierung ist das Verfahren unabhängig von der Art der Beleuchtung und der Eigenfarbe des untersuchten Gegenstands. Neben der Aufnahme von Oberflächentopographien (z. B. Erzeugung eines Höhenschichtlinienbildes) lässt sich das Verfahren aufgrund seiner hohen Arbeitsgeschwindigkeit zur Objekterkennung, beispielsweise bei Industrierobotern, verwenden.

Ausführungsbeispiele der Erfindung werden nun anhand von Zeichnungen näher erläutert. Es zeigen:

Fig. 1 die schematische Darstellung einer optischen Einrichtung für die Durchführung eines phasencodierten Lichtschnittverfahrens,

Fig. 2A die örtliche Variation des spektralen Durchlassvermögens eines Streifenfilters für eine Anordnung nach Fig. 1,

Fig. 2B, C, D die spektralen Durchlasskurven von Streifenfilter und halbdurchlässigen Spiegeln für eine Fernsehkamera in einer Einrichtung nach Fig. 1,

Fig. 3 in den Teilfiguren A bis D die spektralen Durchlasskurven entsprechend Fig. 2A bis D bei multispektraler Codierung,

Fig. 4 das Höhenprofil eines Streifenfilters für multispektrale Codierung,

Fig. 5 den schematischen Aufbau einer Einrichtung zur Durchführung eines phasenempfindlichen Lichtschnittverfahrens bei kleinen Gegenständen,

Fig. 6 den schematischen Aufbau einer Einrichtung zur Durchführung eines phasenempfindlichen Lichtschnittverfahrens für grossflächige Gegenstände.

Bei dem hier vorgeschlagenen Phasenempfänglichen Lichtschnittverfahren werden drei Streifenmuster auf die zu untersuchende Oberfläche projiziert, die jeweils eine sinusförmige örtliche Helligkeitsverteilung aufweisen und die durch spektrale Codierung voneinander unterscheidbar gemacht sind. Die drei Streifenmuster sind örtlich so angeordnet, dass sie jeweils um ±120° gegeneinander verschoben sind. Die auf die zu untersuchende Oberfläche projizierten Streifenmuster werden unter einem Winkel α zur Projektionsrichtung beobachtet und an jedem Punkt des Bildfeldes die jeweilige Intensität in den drei Spektralbereichen gemessen. Da die Verschiebung der drei Sinusgitter relativ zueinander bekannt ist (nämlich ±120°), lässt sich aus den drei ermittelten Messpunkten die relative (örtliche) Phase des betreffenden Bildpunktes eindeutig bestimmen und mit der Nominalphase vergleichen, die bei ungestörter Oberfläche vorliegen müsste. Die Bestimmung der relativen Phase lässt sich sehr einfach mit bekannten videotechnischen Mitteln durchführen.

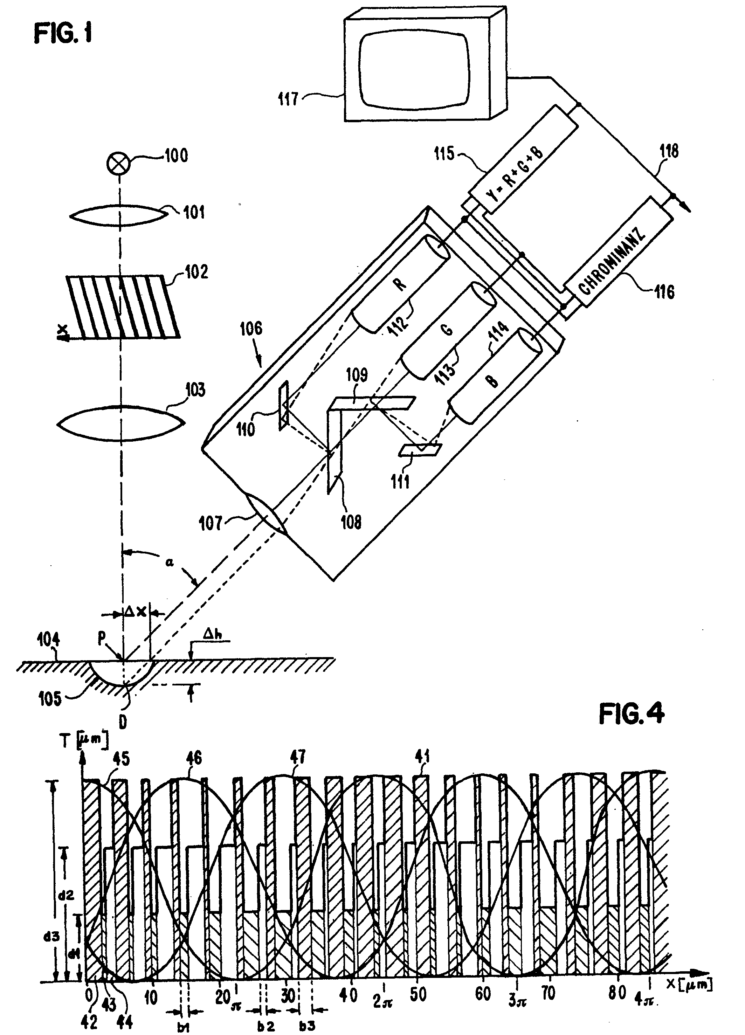

Einzelheiten des phasenempfindlichen Lichtschnittverfahrens werden nun anhand der in Fig. 1 dargestellten Einrichtung erläutert. Eine Lichtquelle 100 beleuchtet über einen Kondensor 101 ein Streifenfilter 102, dessen Streifen in dem hier betrachteten Beispiel senkrecht zur Zeichenebene angeordnet seien. Bei herkömmlichen Lichtschnittverfahren besteht dieses Streifenfilter abwechselnd aus undurchsichtigen und durchsichtigen Gebieten. Eine Abbildungslinse 103 bildet das Streifenfilter auf die zu untersuchende Oberfläche 104 ab, die in diesem Beispiel senkrecht zur optischen Achse des Abbildungssystems (und senkrecht zur Zeichenebene) angeordnet ist. Das aufprojizierte Streifenmuster wird unter einem Winkel α zur Projektionsrichtung beobachtet bzw. durch eine weitere Abbildungslinse 107 auf die photoempfindlichen Flächen einer Farbfernsehkamera 106 projiziert und auf einem Videomonitor 117 wiedergegeben.

Weist die Oberfläche 104 beispielsweise eine Vertiefung 105 mit Tiefe Δh auf, so erscheint der bei ungestörter Oberfläche 104 auf den Punkt P projizierte Streifen in dem Bild der Fernsehkamera um die Strecke $\Delta x$ verschoben, wobei gilt:

$$\Delta h = \Delta x \cdot ctg\ \alpha$$

Aus der lateralen Verschiebung $\Delta x$ im Bild kann somit die Tiefe $\Delta h$ bestimmt werden.

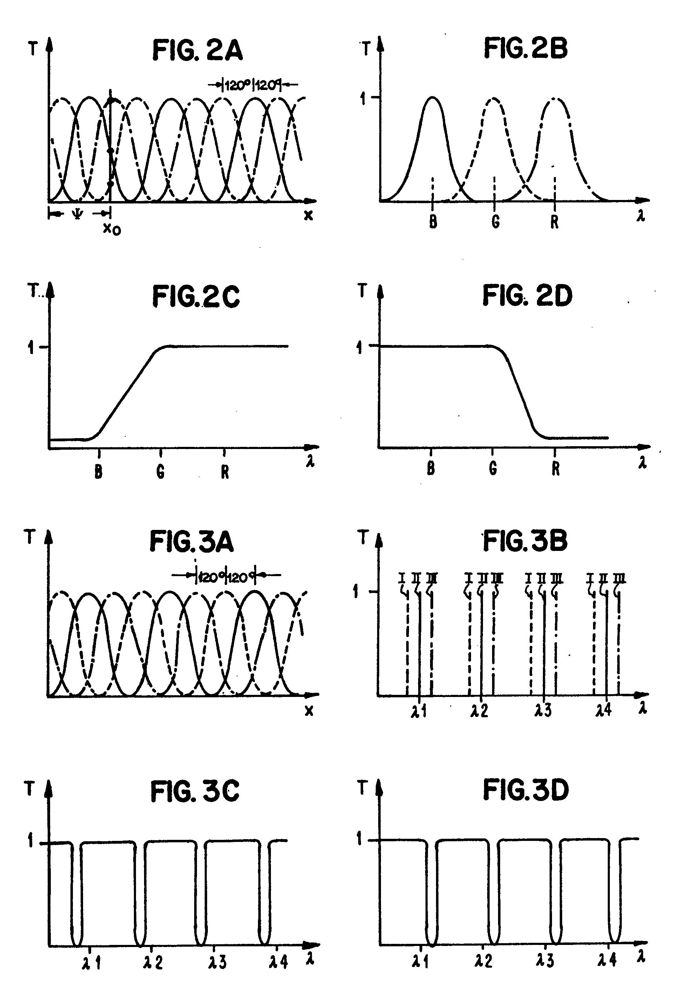

Das oben beschriebene, im Stand der Technik verwendete Streifenfilter wird im einfachsten Ausführungsbeispiel der vorliegenden Erfindung durch ein Streifenfilter ersetzt, bei dem drei gegeneinander versetzte, verschieden farbige Streifenfilter überlagert sind, die jeweils in (z. B. horizontaler) X-Richtung einen sinusförmigen Verlauf der Transmission für die betreffende Lichtwellenlänge aufweisen. In Fig. 2A ist die örtliche Variation der Lichttransmission T dieses Streifengitters für die drei Wellenlängenbereiche angegeben, die in Fig. 2B mit B (für Blau), G (für Grün) und R (für Rot) bezeichnet sind. Die spektrale Transmission nach Fig. 2B entspricht in jedem der betrachteten Wellenlängenbereiche einem einfachen Absorptionsfilter. Ein Streifenfilter mit diesen Eigenschaften kann beispielsweise durch entsprechende Belichtung eines Farbdiapositivfilms erzeugt werden.

Bei der Projektion dieses farbcodierten Streifenfilters 102 auf die Oberfläche 104 bleibt die sinusförmige Intensitätsverteilung innerhalb des gesamten Schärfentiefenbereichs der Abbildung erhalten; im Punkt D der Vertiefung 105 liegt somit dieselbe relative Phasenlage der drei farbigen Einzelstreifengitter vor, wie am Punkt P der ungestörten Oberfläche.

Die Projektion des farbcodierten Streifenfilters auf die Oberfläche 104 wird mit der Farbfernsehkamera 106 abgetastet und dabei mit Hilfe der dichroitischen Strahlteiler 108, 109 in die Spektralbereiche B, G und R zerlegt, aus denen das Streifenmuster 102 besteht. Die Transmission T des dichroitischen Strahlteilers 108 weist dazu den in Fig. 2C gezeigten Verlauf auf, die Transmission T des Strahlteilers 109 den in Fig. 2D angegebenen Verlauf. Nach Reflexion an geeignet angeordneten Umlenkspiegeln 110, 111 gelangen die drei Farbauszüge R, G, B zu den Aufnahmeröhren 112, 113, 114, mit denen die jeweilige spektrale Intensität des gerade abgetasteten Bildpunktes bestimmt wird. Da diese drei Intensitätswerte jeweils einer von drei sinusförmigen Funktionen entsprechen, deren relative Phasenverschiebung bekannt ist (nämlich $\pm 120°$), kann die absolute Phase $\psi$ der sinusförmigen Funktionen bestimmt werden. Diese lassen sich schreiben:

$$R = M + A \cdot \sin \psi$$
$$B = M + A \cdot \sin (\psi + 120°)$$
$$G = M + A \cdot \sin (\psi - 120°)$$

wobei M der Mittelwert und A die Amplitude der sinusförmigen Funktion sind. Die Phase $\psi$ ist dabei eindeutig mit der Ortskoordinate x des Streifenfilters gekoppelt.

Unter Beachtung der trigonometrischen Beziehung:

$$(-\sin x) = \sin (x - 120°) + \sin (x + 120°)$$
$$\cos x = \frac{1}{\sqrt{3}} \cdot \{ \sin (x - 120°) - \sin (x + 120°) \}$$

und

$$M = \frac{1}{3} (R + G + B)$$
$$A \cdot \sin \psi = R - M$$
$$A \cdot \sin (\psi + 120°) = B - M$$
$$A \cdot \sin (\psi - 120°) = G - M$$

folgt für die gesuchte Phase $\psi$:

$$tg\ \psi = \sqrt{3}\ \frac{(G - M) + (B - M)}{(B - M) - (G - M)}$$

Die Grössen M und $G - M$, $B - M$ werden bei der Verarbeitung von Videosignalen zu deren Übertragung nach der Videonorm ebenfalls erzeugt (sogenanntes Y- oder Luminanzsignal R + B + G und das Chrominanzsignal, das aus den Linearkombinationen $B - Y$ und $R - Y$ erzeugt wird). Die Phasenlage $\psi$ jedes Bildpunkts $x_o$ im abgetasteten Bild der Oberfläche 104 kann somit ohne weiteres in den üblichen Fernsehschaltkreisen 115 und 116 erzeugt werden und gestattet so auf dem Monitor 117 die Anzeige der jeweiligen Phasenlage der Bildpunkte. Ändert sich die Phasenlage eines Bildpunkts im Vergleich zu einem Referenzpunkt, beispielsweise wenn der Bildpunkt in der Vertiefung 105 der Oberfläche liegt, so lässt sich aus der Phasenänderung die entsprechende Höhenänderung $\Delta h$ bestimmen. Schaltungstechnische Einzelheiten der videotechnischen Signalverarbeitung sind beispielsweise in der europäischen Patentanmeldung EP-A Nr. 0062083 beschrieben.

Durch die sinusförmige Modulation der drei Bestandteile des Streifenfilters 102 ist eine sehr feine Interpolation zwischen den einzelnen Streifen möglich, so dass sich eine sehr hohe Tiefenauflösung dieses Lichtschnittverfahrens ergibt. Die punktweise Bestimmung der relativen Phase über das gesamte Bild und die visuelle Darstellung der Phasenbeziehungen der einzelnen Punkte erfolgt mit den oben beschriebenen fernsehtechnischen Mitteln sehr schnell, so dass hier eine Echtzeitauswertung zur Verfügung steht.

Die Ausgangssignale der Farbfernsehkamera 106 können ausserdem zur weiteren Verarbeitung an einen Rechner gegeben werden (über Leitung 118), der mit dieser Information Höhenschnittlinien erzeugen kann oder über die zur Objekterkennung notwendigen Algorithmen verfügt.

Beim bisher beschriebenen Ausführungsbeispiel der Erfindung mit Streifenfiltern, die durch ihre Farbe R, G, B unterschieden werden, kann die Phasenauswertung in der Farbfernsehkamera durch die Eigenfarbe des untersuchten Objekts gestört werden. Zur Behebung dieser Schwierigkeit können Streifenfilter dienen, in denen die drei beteiligten, örtlich gegeneinander verschobenen sinusförmigen Streifenmuster (Fig. 3A) nicht durch enge Spektralbereiche, wie in Fig. 2B, unterschieden werden, sondern durch eine Vielzahl von einzelnen, sehr engen Spektralbereichen (Spektrallinien). Die spektrale Durchlässigkeit eines derartigen Filters ist schematisch in Fig. 3B dargestellt: Zum ersten Streifenmuster gehören alle gestrichelt dargestellten Spektrallinien I, zum zweiten Streifenmuster alle ausgezogen dargestellten Spektrallinien II und zum dritten Streifenmuster alle strichpunktierten Spektrallinien III. Die Linien I, II und III liegen jeweils eng benachbart bei Wellenlängen $\lambda 1$, $\lambda 2$, $\lambda 3$ usw. Zur spektralen Trennung der drei Streifenmuster müssen die Strahlteilerplatten 108 und 109 in der Farbfernsehkamera 106 die in Fig. 3C bzw. Fig. 3D dargestellte spektrale Durchlässigkeit aufweisen: Die erste Teilerplatte reflektiert alle Spektrallinien I, die zweite alle Linien II.

Eine derartige Multispektralcodierung der einzelnen Streifenmuster im Streifenfilter 102 lässt sich mit Hilfe optischer Kammfilter erreichen. Es handelt sich dabei um dielektrische Filter, die aus einer oder mehreren dünnen transparenten Schichten bestehen; die Dicke der Schichten bestimmt die spektrale Lage der Durchlässigkeit, die Anzahl der Schichten die spektrale Breite der Durchlassbereiche. Ein Streifenfilter mit einer spektralen Durchlässigkeit nach Fig. 3B und örtlich sinusförmig variierender Durchlässigkeit nach Fig. 3A lässt sich mit einer örtlich variierenden Schichtdicke erzeugen.

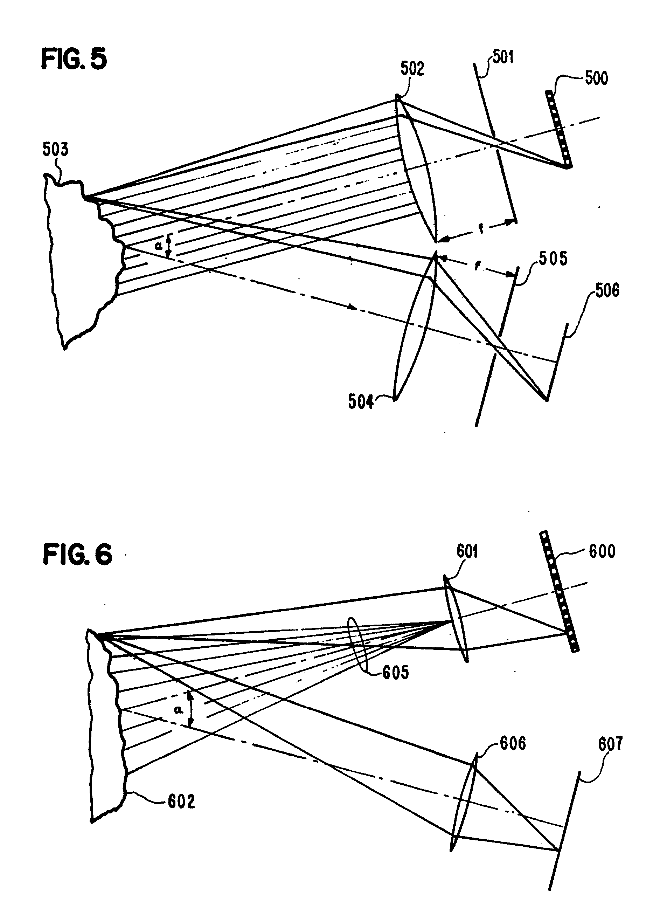

In Fig. 4 ist das Höhenprofil 41 über der Ortskoordinate x eines Streifenfilters dargestellt, das diese gewünschten Eigenschaften hat. Es besteht aus verschiedenen, aneinander anstossenden Zonen 42, 43, 44, die jeweils eine unterschiedliche Dicke (d1, d2, d3) aufweisen und daher unterschiedliche Spektralbereiche durchlassen und deren Breite (b1, b2, b3) in periodischer Weise zu- und abnimmt. Im Beispiel von Fig. 4 sind die Breiten (in Mikrometer) der einzelnen Zonen durch folgende Ausdrücke bestimmt:

$$b1 = 1{,}5 + \cos \psi$$
$$b2 = 1{,}5 + \cos (\psi + 120°)$$
$$b3 = 1{,}5 + \cos (\psi - 120°)$$

Der Winkel $\psi$ entspricht dem früher besprochenen Phasenwinkel; im Beispiel von Fig. 4 ist er so gewählt, dass einer Strecke von 90 µm in X-Richtung ein Phasenwinkel von 4 $\pi$ entspricht. Die Konstante 1,5 ist so gewählt, dass auch die kleinste entstehende Zonenbreite noch mit photolithographischen Methoden hergestellt werden kann. Die Dichte der Zonen (Anzahl pro Phasenintervall $2\pi$) wird so gewählt, dass das entstehende Linienmuster beim Projizieren auf den zu untersuchenden Gegenstand nicht mehr aufgelöst wird.

Die örtliche spektrale Durchlässigkeit eines Interferenzfilters mit verschiedenen Stufenhöhen ist in Fig. 4 ebenfalls eingezeichnet. Die der Stufenhöhe d3 entsprechende Frequenz wird an allen Stellen mit relativ hoher Intensität durchgelassen, an denen die Bereiche mit Dicke d3 eine hohe Breite b3 aufweisen; infolge der periodischen Breitenvariation ergibt sich angenähert die in Fig. 4 mit Bezugszeichen 45 gekennzeichnete sinusförmige Durchlasskurve für diese Frequenz. Die den anderen beiden Zonen mit Dicke d2 und d1 zugeordneten Durchlasskurven 46 und 47 sind ebenfalls angenähert sinusförmig und gegenüber der Kurve 45 µm $\pm 120°$ verschoben.

Die Herstellung derartiger Streifenfilter kann auf photolithographischem Weg erfolgen, wobei nur eine Ätzmaske erforderlich ist, die beim Ätzen der beiden, um $\pm 120°$ versetzten Zonenmuster entsprechend verschoben wird.

Fig. 5 zeigt eine optische Anordnung für ein interpolierendes Lichtschnittverfahren, bei dem der zu untersuchende Gegenstand 503 einen kleineren Durchmesser als die Projektionsoptik 502 und die Abbildungsoptik 504 aufweist. Das Streifenfilter 500 wird mit einer Köhlerschen Beleuchtungseinrichtung von rechts beleutet (Abbild der Lichtquelle im Abbildungsobjektiv 502). Die Projektionsapertur ist durch eine Aperturblende 501 in der rückwärtigen Brennebene der Abbildungsoptik 502 begrenzt, so dass die Oberfläche des Objekts 503 von parallelen Streifen beaufschlagt wird. In diesem Fall besteht eine lineare Beziehung zwischen der Lage eines Oberflächenpunktes und der Phase des Bildpunkts auf der Bildebene 506, der über die Abbildungsoptik 504 und eine in deren rückwärtigem Brennpunkt angeordnete Aperturblende 505 erzeugt wird.

In Fig. 6 ist eine optische Anordnung für ein interpolierendes Lichtschnittverfahren dargestellt, das für grossflächige Objekte 602 Anwendung findet. Ohne Begrenzung von Projektions- und Abbildungsapertur erhält man divergierende Streifenebenen 605, so dass keine lineare Beziehung zwischen Objektlage und Phase mehr besteht. Zur eindeutigen Bestimmung der Objektoberfläche 602 müssen die einzelnen Streifen, die über die Abbildungsoptik 606 auf der Bildebene 607 entstehen, identifiziert werden. Hat die Oberfläche keine Schattenzonen, so genügt das Abzählen der Streifen, z. B. vom Rand des Streifenfilters. Im allgemeinen Fall muss jeder Streifen bzw. jede Gruppe von Streifen, die im kleinstmöglichen zusammenhängenden Feld erkannt werden soll, markiert werden. Dies kann z. B. durch Modulation des Weisslichtanteils geschehen; dazu wird dem vom Streifenfilter erzeugten Spektrum ein Weisslichtanteil überlagert, der ortsabhängig ist. Im einfachsten Fall handelt es sich dabei um einen Weisslichtanteil, der von einem Referenzpunkt ausgehend stetig zunimmt. Wird neben der Phase im spektralcodierten Licht auch die Intensität des Weisslichts gemessen, so können Oberflächenpunkte mit gleicher Phase, aber verschiedenem Weisslichtanteil, ohne weiteres voneinander unterschieden werden.

## Patentansprüche

1. Lichtschnittverfahren mit streifenförmiger Beleuchtung der zu untersuchenden Objektfläche, dadurch gekennzeichnet, dass auf die Objektfläche (104) drei spektral unterschiedlich codierte Streifenmuster projiziert werden, deren örtliche Intensitäten einen sinusförmigen, um + bzw. $-120°$ gegeneinander verschobenen Verlauf (Fig. 2A) aufweisen, und dass in den unter einem Winkel $\alpha$ zur Projektionsrichtung erzeugten Abbildungen der Streifenmuster die relative Phase eines jeden Bildpunktes durch Messung der Intensität jedes der spektral unterschiedlich codierten Streifenmuster ermittelt wird.

2. Lichtschnittverfahren nach Anspruch 1, dadurch gekennzeichnet, dass zur spektral unterschiedlichen Codierung jeweils verschiedene enge Ausschnitte aus dem optischen Spektrum verwendet werden (Fig. 2B).

3. Lichtschnittverfahren nach Anspruch 1, dadurch gekennzeichnet, dass zur spektral unterschiedlichen Codierung Multispektrallinien eines Interferenzfilters (Fig. 4) verwendet werden (Fig. 3B).

4. Lichtschnittverfahren nach einem der Ansprüche 1 bis 3, dadurch gekennzeichnet, dass die Streifenmuster durch Parallelprojektion auf die untersuchende Objektfläche (104) abgebildet werden (Fig. 5).

5. Lichtschnittverfahren nach einem der Ansprüche 1 bis 3, dadurch gekennzeichnet, dass die Steifenmuster mit divergentem Strahlengang auf die zu untersuchende Objektfläche (104) abgebildet werden (Fig. 6).

6. Lichtschnittverfahren nach einem der Ansprüche 1 bis 5, dadurch gekennzeichnet, dass zur eindeutigen Unterscheidung von Bildpunkten mit gleicher Phase den spektral unterschiedlich codierten Streifenmustern ein Weisslichtanteil überlagert wird, der eine eindeutige Funktion der Objektpunkte ist.

7. Lichtschnittverfahren nach einem der Ansprüche 1 bis 6, dadurch gekennzeichnet, dass die Phasenauswertung der Bildpunkte mit einer modifizierten Farbfernsehkamera (106) erfolgt, deren Farbteiler (108, 109, 110) auf die zur Codierung der Streifenmuster verwendeten Frequenzen abgestimmt sind.

8. Lichtschnittverfahren nach Anspruch 7, dadurch gekennzeichnet, dass die Ausgangssignale (R, G, B) der Farbfernsehkamera (106) an sich bekannten videotechnischen Verknüpfungsschaltungen (Luminanz 115; Chrominanz 116) zugeführt werden.

9. Lichtschnittverfahren nach einem der Ansprüche 7 oder 8, dadurch gekennzeichnet, dass die Phase jedes Bildpunktes auf einem an die Kamera (106) angeschlossenen Farbmonitor (117) visuell dargestellt wird.

## Claims

1. A light sectioning method with stripe-illumination of the object surface to be tested, characterized in that three spectrally differently encoded stripe patterns, whose local intensities are sinusoidal and displaced relative to each other by + and −120°, respectively (Fig. 2A), are projected on to the object surface (104), and in that, in the images of the stripe patterns generated at an angle α to the direction of projection, the relative phase of each image point is determined by measuring the intensity of each of the spectrally differently encoded stripe patterns.

2. The light sectioning method according to Claim 1, characterized in that differently narrow bands from the optical spectrum are used for different spectral encoding (Fig. 2B).

3. The light sectioning method according to Claim 1, characterized in that multispectral lines of an interference filter (Fig. 4) are used for different spectral encoding (Fig. 3B).

4. A light sectioning method according to any one of the Claims 1 to 3, characterized in that the stripe patterns are imaged by parallel projection on to the object surface (104) to be tested (Fig. 5).

5. A light sectioning method according to any one of the Claims 1 to 3, characterized in that the stripe patterns are imaged with a divergent beam path on to the object surface (104) to be tested (Fig. 6).

6. A light sectioning method according to any one of the Claims 1 to 5, characterized in that, for uniquely distinguishing image points with the same phase, a white light component, which is a unique function of the object points, is superimposed upon the spectrally differently encoded stripe patterns.

7. A light sectioning method according to any one of the Claims 1 to 6, characterized in that phase evaluation of the image points is effected by a modified TV camera (106), whose colour separators (108, 109, 110) are tuned to the frequencies used to encode the stripe patterns.

8. The light sectioning method according to Claim 7, characterized in that the output signals (R, G, B) of the colour TV camera (106) are applied to video-technical circuits known *per se* (luminance 115; chrominance 116).

9. The light sectioning method according to Claim 7 or 8, characterized in that the phase of each image point is visually represented on a colour monitor (117) connected to the camera (106).

## Revendications

1. Procédé de coupe optique par interpolation où la surface à explorer est exposée à une illumination en forme de bandes, caractérisé en ce qu'on projette, sur la surface dudit objet (104), trois configurations de bandes avec un codage spectral différent dont les intensités locales présentent une courbe de forme sinusoïdale (fig. 2A) ayant un écart de + ou −120° l'une par rapport à l'autre, en ce que, dans les reproductions desdites configurations de bandes générées dans un angle α par rapport à la direction de projection, la phase relative de chaque point d'image est définie par la mesure de l'intensité de chacune des configurations à codage spectral différent.

2. Procédé de coupe optique par interpolation selon la revendication 1, caractérisé en ce qu'on utilise des coupes, chaque fois d'une largeur différente, d'un spectre optique pour obtenir les différents codages spectraux (fig. 2B).

3. Procédé de coupe optique par interpolation selon la revendication 1, caractérisé en ce qu'on utilise (fig. 3B) des lignes multispectrales d'un filtre d'interférence pour obtenir les différents codages spectraux (fig. 4).

4. Procédé de coupe optique par interpolation selon l'une des revendications 1 à 3, caractérisé en ce que ladite configuration de bandes est reproduite par projection parallèle sur ladite surface de l'objet (104) à explorer (fig. 5).

5. Procédé de coupe optique par interpolation selon l'une des revendications 1 à 3, caractérisé en ce que lesdites configurations de bandes sont reproduites avec un chemin optique divergent sur la surface de l'objet à explorer (104) (fig. 6).

6. Procédé de coupe optique par interpolation selon l'une des revendications 1 à 5, caractérisé en ce que, afin de distinguer de façon non équivoque les points d'image de phase similaire, une portion de lumière blanche est superposée aux configurations de bandes de codages respectivement différents, laquelle lumière blanche est une fonction non équivoque des points de l'objet.

7. Procédé de coupe optique par interpolation selon l'une des revendications 1 à 6, caractérisé en ce que l'évaluation des phases des points d'image est réalisée à l'aide d'une caméra de télévision couleurs adaptée (106) dont les séparateurs couleurs (108, 109, 110) sont synchronisés avec les fréquences utilisées pour coder les configurations de bandes.

8. Procédé de coupe optique par interpolation selon la revendication 7, caractérisé en ce que les signaux de sortie (R, G, B) de ladite caméra de télévision couleurs (106) sont appliqués à des circuits combinatoires vidéotechniques connus en soi (luminance 115; chrominance 116).

9. Procédé de coupe optique par interpolation selon l'une des revendications 7 ou 8, caractérisé en ce que la phase de chaque point d'image est visualisée sur une unité de contrôle de couleurs (117) raccordée à ladite caméra de télévision (106).

**FIG. 1**

**FIG. 4**

FIG. 2A

FIG. 2B

FIG. 2C

FIG. 2D

FIG. 3A

FIG. 3B

FIG. 3C

FIG. 3D

**FIG. 5**

**FIG. 6**